# EUROPEAN PATENT APPLICATION

(11) **EP 4 783 138 A1**
(43) Date of publication of application: **29.07.2026**
(21) Application number: 24867337.8
(22) Date of filing: 10.09.2024
(51) Int. Cl.: G07C 9/00

(54) **REMOTE CONTROL KEY AND VEHICLE**

(30) Priority: 21.09.2023 CN 202322583190 U
(71) Applicant: BYD Company Limited, Shenzhen, Guangdong 518118 (CN)
(72) Inventor: SONG, Yaozhi, Shenzhen, Guangdong 518118 (CN); MIN, Cao, Shenzhen, Guangdong 518118 (CN)
(74) Representative: Mathys & Squire
(86) International application number: PCT/CN2024/118027
(87) International publication number: WO 2025/060925

(57) **Abstract**

A remote control key and vehicle are provided. The remote control key includes a metallic outer frame and a circuit board. The metallic outer frame encloses an accommodation space. The metallic outer frame has a first end and a second end. The circuit board is accommodated in the accommodation space. The circuit board is provided with a ground wire connected to the first end. The circuit board is provided with a radio frequency circuit for transmitting a radio frequency signal. A feed point of the radio frequency circuit is electrically connected to the second end to enable the metallic outer frame to radiate the radio frequency signal.

## Description

This application claims priority to Chinese patent application No. 202322583190.1 filed with the China National Intellectual Property Administration on September 21, 2023 and entitled "REMOTE CONTROL KEY AND VEHICLE", which is incorporated herein by reference in its entirety.

### TECHNICAL FIELD

This application relates to the field of vehicle technologies, and specifically, to a remote control key and a vehicle.

### BACKGROUND

With rapid development of the automotive industry, vehicles with passive entry passive start (PEPS for short) systems are becoming increasingly popular among users. In related technologies, vehicles with PEPS systems generally employ printed circuit board (PCB for short) antennas, leading to a decrease in signal transceiver performance of a vehicle key.

### SUMMARY

This application provides a remote control key and a vehicle, to solve the problem that signal transceiver performance of a remote control key decreases as radiation from an antenna of the remote control key is easily affected by a metallic member on the remote control key.

To solve the foregoing technical problem, this application provides the following technical solutions.

According to a first aspect, this application provides a remote control key, including:
a metallic outer frame, wherein the metallic outer frame encloses an accommodation space, and the metallic outer frame has a first end and a second end; and
a circuit board, wherein the circuit board is accommodated into the accommodation space, and the circuit board is provided with a ground wire connected to the first end, the circuit board is provided with a radio frequency circuit for transmitting a radio frequency signal, and a feed point of the radio frequency circuit is electrically connected to the second end, so that the metallic outer frame radiates the radio frequency signal.

In one implementation, the remote control key further includes an insulating housing, wherein the metallic outer frame is embedded on an outer surface of the insulating housing, and an inner wall of the insulating housing is fixedly connected to the circuit board.

In one implementation, the circuit board is provided with an impedance matching circuit, and the impedance matching circuit is connected between the first end and the ground wire. The circuit board is connected to the metallic outer frame to form a radio frequency chain, and the impedance matching circuit is configured to adjust an impedance of the radio frequency chain.

In one implementation, the impedance matching circuit is configured to adjust the impedance of the radio frequency chain within a range of 45 Ω to 55 Ω.

In one implementation, the impedance matching circuit includes a capacitor, and the capacitor is electrically connected between a first end of the metallic outer frame and the ground wire.

In one implementation, the impedance matching circuit includes an inductor, and the inductor is electrically connected between the first end of the metallic outer frame and the ground wire.

In one implementation, the capacitor and the inductor are connected in series or in parallel.

In one implementation, the impedance matching circuit includes an inductor, and the inductor is electrically connected between the first end of the metallic outer frame and the ground wire.

In one implementation, the impedance matching circuit includes a first capacitor and a second capacitor, wherein the first capacitor and the second capacitor are connected in series and then connected to the ground wire.

In one implementation, the first end is fixed to the circuit board via a first fastener and connected to a ground wire of the circuit board, and the second end is fixed to the circuit board via a second fastener to form the radio frequency chain.

In one implementation, one of the first end and the circuit board is provided with a first metallic connecting piece, and the other of the first end and the circuit board is provided with a second metallic connecting piece. The first metallic connecting piece is provided with a first inserting post, the second metallic connecting piece is provided with a first inserting slot, and the first inserting post is inserted into the first inserting slot.

One of the second end and the circuit board is provided with a third metallic connecting piece, and the other of the second end and the circuit board is provided with a fourth metallic connecting piece. The third metallic connecting piece is provided with a second inserting post, the fourth metallic connecting piece is provided with a second inserting slot, and the second inserting post is inserted into the second inserting slot.

In one implementation, when the metallic outer frame is an entirety of an outer casing of the remote control key, the metallic outer frame may be made of aluminum alloy or stainless steel; and when the metallic outer frame is a part of an outer casing of the remote control key, the metallic outer frame may be made of copper or titanium.

According to a second aspect, this application further provides a vehicle, including the remote control key as described above.

A remote control key provided by this application takes a metallic outer frame as an antenna of the remote control key, so that the antenna is exposed on the surface of the remote control key, the influence of metal of the remote control key on radiation from the antenna is reduced, and signal transceiver performance of the remote control key is enhanced. Furthermore, the circuit board is provided with an impedance matching circuit electrically connected to the metallic outer frame. The metallic outer frame and circuit board are connected to form a radio frequency chain, and the impedance matching circuit is configured to adjust an impedance of the radio frequency chain to approximately 50 ohms. In this case, the transmission signal power of the remote control key reaches an optimal state, making a vehicle equipped with the remote control key provided in this application more responsive and reliable during keyless entry and start.

### BRIEF DESCRIPTION OF DRAWINGS

To describe technical solutions in implementations of this application or in the prior art more clearly, the following briefly introduces accompanying drawings required for describing the embodiments or a conventional technology. Clearly, the accompanying drawings in the following description show merely some implementations of this application, and a person of ordinary skill in the art may still derive other drawings from these accompanying drawings without creative efforts.
FIG. 1 is a diagram of a partial structure of a remote control key according to an implementation of this application;
FIG. 2 is a diagram of a radio frequency chain according to an implementation of this application;
FIG. 3 is a diagram of an impedance matching circuit according to an implementation of this application;
FIG. 4 is a diagram of a structure showing a connection between a metallic outer frame and a circuit board according to an implementation of this application;
FIG. 5 is a cross-sectional view of a partial structure showing a connection between a metallic outer frame and a circuit board according to an implementation of this application; and
FIG. 6 is a diagram of a structure of a vehicle according to an implementation of this application.

Reference numerals are described as follows:
10: remote control key; 20: vehicle; 100: metallic outer frame; 110: first end; 120: second end; 130: accommodation space; 140: insulating housing; 200: circuit board; 210: impedance matching circuit; 211: first capacitor; 212: second capacitor; 213: radio frequency circuit; 214: feed point; 300: radio frequency chain; 410: first fastener; 420: second fastener; 510: first metallic connecting piece; 511: first inserting post; 520: second metallic connecting piece; 521: first inserting slot; 610: third metallic connecting piece; 611: second inserting post; 620: fourth metallic connecting piece; 621: second inserting slot.

### DESCRIPTION OF EMBODIMENTS

The following clearly and completely describes the technical solutions in the implementations of this application with reference to the accompanying drawings in the implementations of this application. Clearly, the described implementations are merely a part rather than all of the implementations of this application. All other implementations obtained by a person of ordinary skill in the art based on the embodiments of this application without creative efforts shall fall within the scope of protection of this application.

It will be noted that when a component is said to be "fixed" to another component, the component may be directly disposed on another component, or an intermediate component may also be present therebetween. When a component is considered to be "connected" to another component, the component may be directly connected to another component, or an intermediate component may also be present therebetween at the same time.

Unless otherwise defined, all technical and scientific terms used herein have the same meaning as commonly understood by those skilled in the art. The terms used in this application within this specification are solely for describing specific embodiments and are not intended to limit this application. The term "and/or" as used in this application includes any and all combinations of one or more of related listed items.

Some implementations of this application are described in detail below with reference to accompanying drawings. The following embodiments and features in the embodiments can be mutually combined in the case of no conflict.

In a conventional vehicle, a remote control key needs to be inserted into a door lock cylinder to unlock a vehicle door, and then the remote control key needs to be inserted into an ignition lock cylinder to start the vehicle. When it is inconvenient for a user to insert the remote control key, for example, when the user is carrying a number of items in hands or the remote control key is placed inside a bag, it is time-consuming to search for the remote control key, resulting in a poor vehicle use experience of the user.

A passive entry passive start (PEPS for short) system has gradually evolved from an optional feature for a high-trim vehicle to a standard configuration for all vehicles. A conventional PEPS system is mainly composed of a door handle micro switch, a capacitive touch switch, a tailgate micro switch, a remote control key, a low-frequency antenna, a one-button start button, and a PEPS controller. When a user carrying the remote control key is within one to two meters of a vehicle body, the user touches the capacitive touch switch at a door handle on a driver side or a front passenger side or the door handle micro switch on a driver side or front passenger side, the PEPS controller is configured to activate radio frequency communication after detecting a distance and location of the user relative to the vehicle body via a low-frequency antenna array. An antenna in the remote control key can receive a radio frequency wireless signal for authentication of an identity of the key. Upon successful authentication, the remote control key transmits a radio frequency signal, which is radiated by the antenna in the remote control key. After an antenna of the vehicle receives the radio frequency signal, a controller controls the vehicle door to unlock to achieve keyless entry. The locking of the vehicle door, the opening of a tailgate, and the start of the vehicle are implemented based on the same principle as that of unlocking of the vehicle door.

Therefore, the performance of the remote control key in transmitting and receiving the radio frequency signal is a key factor affecting the implementation of the PEPS system. As the remote control key transmits and receives the radio frequency signal through the antenna, arrangement of the antenna of the remote control key is crucial.

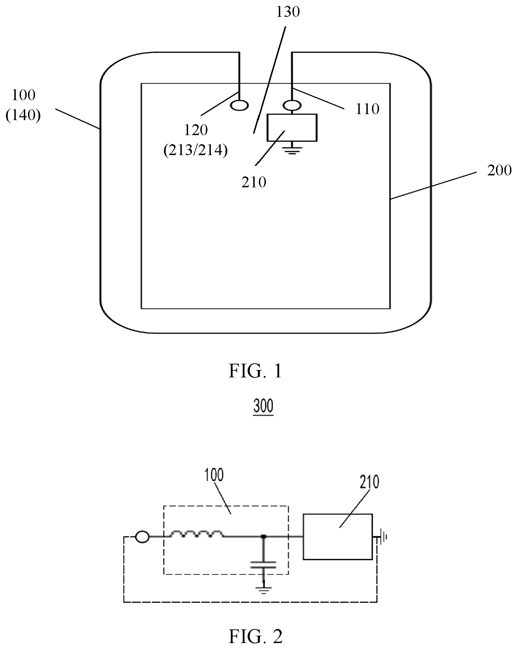

With reference to FIG. 1, FIG. 1 is a diagram of a partial structure of a remote control key according to an implementation of this application. An embodiment of this application provides a remote control key 10, where the remote control key 10 includes a metallic outer frame 100 and a circuit board 200. The metallic outer frame of 100 encloses an accommodation space 130. The metallic outer frame 100 has a first end 110 and a second end 120, and the first end 110 is connected to a ground wire. The circuit board 200 is accommodated in the accommodation space. The circuit board 200 is provided with a radio frequency circuit 213 for transmitting a radio frequency signal. A feed point 214 of the radio frequency circuit is electrically connected to the second end 120. The radio frequency signal emitted by the circuit board 200 is transmitted to the second end 120 via the feed point, and then the radio frequency signal is transmitted to the metallic outer frame 100, so that the metallic outer frame 100radiates the radio frequency signal.

The metallic outer frame 100 of this application is an outer casing portion of the remote control key 10. The metallic outer frame 100 is directly used as an antenna of the remote control key 10, so that the antenna is placed externally on the surface of the remote control key 10. Specifically, compared with a conventional printed circuit board (PCB for short) built-in antenna, the antenna of the remote control key 10 of this application can reduce an influence of a metallic outer casing of the remote control key 10 on radiation from the antenna to a great extent, thereby ensuring a signal transceiver function of the remote control key 10 and meeting demands of the PEPS system of the vehicle. It will be noted that the metallic outer frame 100 may be the entirety or a part of the outer casing of the remote control key 10. When the metallic outer frame 100 is the entirety of the outer casing of the remote control key 10, the metallic outer frame 100 may be made of aluminum alloy, stainless steel, and the like. The outer casing of the remote control key 10 made of aluminum alloy or stainless steel can increase impact resistance, durability, and texture of the remote control key 10 while ensuring radiation of the radio frequency signal. When the metallic outer frame 100 is a part of the outer casing of the remote control key 10, the metallic outer frame may be made of copper, titanium, and the like. The metallic outer frame 100 made of copper or titanium may radiate a stronger radio frequency signal and can enhance aesthetics of the remote control key 10.

In one implementation, the remote control key 10 further includes an insulating housing 140, the metallic outer frame 100 is embedded on an outer surface of the insulating housing, and an inner wall of the insulating housing is fixedly connected to the circuit board 200. In one implementation, the metallic outer frame 100 in this embodiment is a part of the outer casing of the remote control key 10, the metallic outer frame 100 may be a middle frame of the remote control key 10 or another metallic portion. When the metallic outer frame 100 is the middle frame of the remote control key 10, the insulating housing is composed of a first housing and a second housing, and the metallic outer frame 100 connects the first housing and the second housing and serves a part of the outer casing of the remote control key 10, thereby reducing material consumption of the remote control key 10. When used as another metallic portion of the remote control key 10, the metallic outer frame 100 may serve as a decorative member of the remote control key 10, thereby improving visual aesthetics and texture of the remote control key 10. The metallic outer frame 100 is embedded on the outer surface of the insulating housing. When the metallic outer frame 100 radiates a radio frequency signal outward, the influence of metallic of the remote control key 10 on the radiation from the metallic outer frame 100 is reduced. The radio frequency circuit on the circuit board 200 includes a radio frequency transmitter, and the radio frequency transmitted is configured to transmit a radio frequency signal. A power supply in the remote control key 10 is configured to power the radio frequency transmitter. The radio frequency signal transmitted by the radio frequency transmitter is transmitted to the metallic outer frame 100 via a feed point on the circuit board 200, and then radiated by the metallic outer frame 100 to achieve wireless transmission of the radio frequency signal. The circuit board 200 is fixed by the insulating housing, and the circuit board 200 is housed in the outer casing of the remote control key 10 formed by connecting the metallic outer frame 100 with the insulating housing, so that the circuit board 200 can be protected. The insulating housing may be made of plastic, rubber, and the like.

With reference to FIG. 1 and FIG. 2, in an embodiment provided in this application, the circuit board 200 is provided with an impedance matching circuit 210. The impedance matching circuit 210 is connected between the first end 110 and the ground wire. The circuit board 200 is connected to the metallic outer frame 100 to form a radio frequency chain 300. The impedance matching circuit 210 is configured to adjust an impedance of the radio frequency chain 300. It will be noted that this application has no restrictions on the shape of the metallic outer frame 100. As metallic outer frames 100 of different shapes have different capacitance values and inductance values, the impedance of the radio frequency chain 300 composed of the circuit board 200 and the metallic outer frame 100 is also different. The radio frequency chain 300 with an impedance of 50 Ω can maintain a balance between transmission power and loss of the radio frequency signal. In this application, the impedance matching circuit 210 is connected one end (first end 110) of the metallic outer frame 100, so that the impedance matching circuit 210 can adjust the impedance of the radio frequency chain 300 composed of the circuit board 200 and the metallic outer frame 100 to 45 Ω to 55 Ω (Ω represents ohms) when necessary. The impedance matching circuit 210 can adjust the impedance of the radio frequency chain 300 to close to 50 Ω, which may allow the transmission power of the radio frequency signal of the remote control key 10 to reach an optimal state. For example, the impedance of the radio frequency chain 300 is adjusted to 50 Ω by the impedance matching circuit 210, in this case, reflection of the radio frequency signal of the remote control key 10 is minimized, and transmission of the transmission power of the radio frequency signal of the remote control key 10 is maximized, so that a wireless radio frequency signal transmitted by the remote control key 10 is more easily receivable by the antenna of the vehicle.

Opposition to a current in a circuit is called impedance. Specifically, for a circuit with resistance, inductance, and capacitance, the impedance is a complex number, which is usually represented by letter Z, where a real part of Z is called resistance, and an imaginary part of Z is called reactance. The reactance includes capacitive reactance and inductive reactance. Opposition to the current in the circuit by the capacitance is called capacitive reactance, and opposition to the current in the circuit by the inductance is called inductive reactance. Visibly, both the capacitance and the inductance may increase the impedance of the radio frequency chain 300. To match the impedance of the radio frequency chain 300 to 45 Ω to 55 Ω, the reactance should be adjusted to zero, at which point the impedance is a resistance value of the real part.

Impedance, which is a sum of the resistance and the reactance, is expressed mathematically as: Z=R+jX, where Z is impedance, in ohms; R is resistance, in ohms; X is reactance, in ohms; and j is an imaginary unit. When X>0, it is called inductive reactance; when X=0, the impedance is pure resistance; when X<0, it is called capacitive reactance.

The total reactance of the circuit can be expressed mathematically as: X=X_{L}-X_{C}, where X_{L} is inductive reactance of the circuit, and X_{C} is capacitive reactance of the circuit.

With reference to FIG. 2, the metallic outer frame 100 may be equivalent to a circuit composed of a series inductor and a grounded capacitor. The impedance matching circuit 210 has a capacitor, and the capacitor in the impedance matching circuit 210 is electrically connected between the first end 110 of the metallic outer frame 100 and the ground wire. If the impedance of the radio frequency chain 300 has inductive reactance, the impedance matching circuit 210 may include merely a capacitor, and there may be one or more capacitors, where the capacitor itself has an internal resistance. When there is one capacitor, the capacitive reactance of the radio frequency chain 300 increases, the reactance decreases, and the resistance of the real part increases. When there are multiple capacitors, the multiple capacitors may be connected in series or in parallel. When the multiple capacitors are connected in series, the capacitive reactance of the radio frequency chain 300 increases, the reactance decreases, and the resistance of the real part increases. When the multiple capacitors are connected in parallel, the capacitive reactance of the radio frequency chain 300 decreases, the reactance increases, and the resistance of the real part decreases.

In one implementation, the impedance matching circuit 210 has an inductor, and the inductor in the impedance matching circuit 210 is electrically connected to the first end 110 of the metallic outer frame 100 and the ground wire. Specifically, if the impedance of the radio frequency chain 300 has capacitive reactance, the impedance matching circuit 210 may merely include an inductor, and there may be one or more inductors, where the inductor itself has an internal resistance. When there is one inductor, the inductive reactance of the radio frequency chain 300 increases, the reactance increases, and the resistance of the real part increases. When there are multiple inductors, the multiple inductors may be connected in series or in parallel. When the multiple inductors are connected in series, the inductive reactance of the radio frequency chain 300 increases, the reactance increases, and the resistance of the real part increases. When the multiple inductors are connected in parallel, the inductive reactance of the radio frequency chain 300 decreases, the reactance decreases, and the resistance of the real part decreases.

In one implementation, the impedance matching circuit 210 includes both a capacitor and an inductor. The capacitor and inductor are either in series or in parallel and are adjusted according to an actual impedance matching requirement of the radio frequency chain 300. That is, a connection method of the capacitor and inductor in the impedance matching circuit 210 may be adjusted according to different metallic outer frames 100.

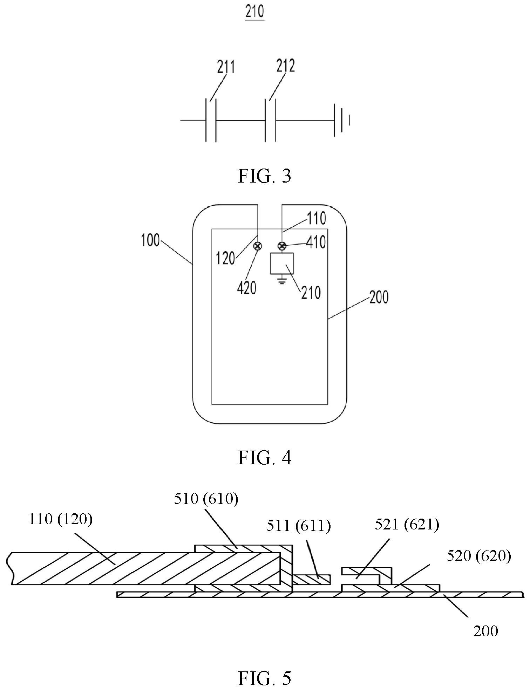

With reference to FIG. 3, an impedance matching circuit 210 provided in one implementation of this application includes a first capacitor 211 and a second capacitor 212. The first capacitor 211 and the second capacitor 212 are connected in series and grounded to increase the capacitive reactance of the radio frequency chain 300, thereby making the reactance approach zero or equal to zero and adjusting the impedance of the radio frequency chain 300 to 45 Ω to 55 Ω.

Specifically, when the impedance matching circuit 210 performs impedance matching on the radio frequency chain 300, an analyzer is required for assistance. The analyzer can be configured to analyze the radio frequency chain 300 to be matched to form a Smith chart of the radio frequency chain 300 to be matched. Prior to performing impedance matching debugging on the radio frequency chain 300, if the impedance of the radio frequency chain 300 is mismatched, the Smith chart formed when analyzing the impedance of the radio frequency chain 300 does not converge to a complete circle. After impedance matching debugging of the radio frequency chain 300 is completed, if the Smith chart formed by analyzing the impedance of the radio frequency chain 300 can converge to a complete circle, the formed Smith chart satisfies a preset requirement, and the impedance matching of the radio frequency chain 300 is completed.

With reference to FIG. 4, in one possible implementation, the first end 110 is fixed to the circuit board 200 via a first fastener 410 and connected to the ground wire of the circuit board 200, and the second end 120 is fixed to the circuit board 200 via a second fastener 420 to form an electrical connection. Specifically, the first fastener 410 and the second fastener 420 may be screws, and the like. The circuit board 200 is provided with two threaded holes matching the screws. Each of the first end 110 and the second end 120 is provided with a through hole through which a shank of the screw can pass. The first end 110 is fixed to the circuit board 200 with one screw, and the second end 120 is fixed to the circuit board 200 with another screw, thereby achieving a connection between the metallic outer frame 100 and the circuit board 200. Furthermore, the screws for fastening the first end 110 and the second end 120 are metallic conductors, thereby achieving an electrical connection between the first end 110 and the circuit board 200 and an electrical connection between the second end 120 and the circuit board 200. The first end 110 is fixed to the circuit board 200 via the first fastener 410, and the second end 120 is fixed to the circuit board 200 via the second fastener 420, such that a connection structure between the metallic outer frame 100 and the circuit board 200 is simple and firm.

With reference to FIG. 1 and FIG. 5, in one possible implementation, one of the first end 110 and the circuit board 200 is provided with a first metallic connecting piece 510, and the other of the first end 110 and the circuit board 200 is provided with a second metallic connecting piece 520. The first metallic connecting piece 510 is provided a first inserting post 511, the second metallic connecting piece 520 is provided with a first inserting slot 521, and the first inserting post 511 is inserted into the first inserting slot 521. One of the second end 120 and the circuit board 200 is provided with a third metallic connecting piece 610, and the other of the second end 120 and the circuit board 200 is provided with a fourth metallic connecting piece 620. The third metallic connecting piece is provided with a second inserting post 611, the fourth metallic connecting piece is provided with a second inserting slot 621, and the second inserting post is inserted into the second inserting slot. Specifically, the first metallic connecting piece 510 is soldered to the first end 110, the third metallic connecting piece is soldered to the second end 120, and the second metallic connecting piece 520 and the fourth metallic connecting piece are soldered to the circuit board 200. The first metallic connecting piece 510 and the second metallic connecting piece 520 are in plug-in connection via the first inserting post 511 and the first inserting slot 521, and the third metallic connecting piece and the fourth metallic connecting piece are in plug-in connection via the second inserting post and the second inserting slot. The metallic outer frame 100 is in plug-in connection with the circuit board 200, making installation and disassembly convenient.

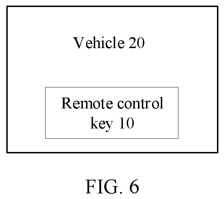

With reference to FIG. 6, FIG. 6 is a diagram of a structure of a vehicle according to one implementation of this application. A vehicle 20 includes the remote control key 10 according to foregoing embodiments of this application.

In the embodiment of this application, the remote control key 10 can be applied to a vehicle with a passive entry passive start system. As a metallic outer frame 100 serves as an antenna for the remote control key 10 and the metallic outer frame 100 is exposed on an outer surface of the remote control key 10, the metallic outer frame 100 can directly serve as a radiator of a radio frequency signal. This can reduce adverse effects of a metallic outer casing of the remote control key 10 on the radio frequency signal, such as attenuation and reflection, so that the radio frequency signal transmitted by the remote control key 10 can be more easily received by an antenna of the vehicle, and the vehicle 20 equipped with the remote control key 10 provided in this application is more responsive and reliable during keyless entry and start. In addition, a circuit board 200 is provided with an impedance matching circuit 210 electrically connected to the metallic outer frame 100. The impedance matching circuit 210 can be configured to adjust an impedance of a radio frequency chain 300 formed by a connection between the metallic outer frame 100 and the circuit board 200. Therefore, the impedance of the radio frequency chain 300 is close to 50 ohms. In this way, the power of the transmitted signal of the remote control key 10 can reach an optimal state, power consumption of the remote control key 10 is minimized, and the problem of different impedances caused by differences in the shape and length of the metallic outer frame 100 itself can be solved.

In the description of this application, it will be noted that an orientation or positional relationship indicated by terms "center", "upper", "lower", "left", "right", "vertical", "horizontal", "inside", "outside" and the like is based on the orientation or positional relationship shown in the accompanying drawings only for convenience of description of this application and simplification of description rather than indicating or implying that the apparatus or element referred to must have a particular orientation, be constructed and operate in a particular orientation, and thus are not to be construed as limiting this application.

The foregoing disclosure is merely illustrative of example embodiments of this application and is not intended to limit the scope of this application. Those of ordinary skill in the art may appreciate that all or part of the processes for implementing the foregoing embodiments can be implemented, and equivalent changes made in accordance with the claims of this application shall still fall within the scope of this application.

## Claims

1. A remote control key (10), comprising:
a metallic outer frame (100), the metallic outer frame enclosing an accommodation space (130), and the metallic outer frame having a first end (110) and a second end (120); and
a circuit board (200), the circuit board being accommodated in the accommodation space, the circuit board being provided with a ground wire connected to the first end, the circuit board being provided with a radio frequency circuit (213) for transmitting a radio frequency signal, and a feed point (214) of the radio frequency circuit being electrically connected to the second end, so that the metallic outer frame radiates the radio frequency signal.

2. The remote control key according to claim 1, wherein the remote control key further comprises an insulating housing (140), the metallic outer frame is embedded on an outer surface of the insulating housing, and an inner wall of the insulating housing is fixedly connected to the circuit board.

3. The remote control key according to claim 1, wherein the circuit board is provided with an impedance matching circuit (210), the impedance matching circuit is connected between the first end and the ground wire, the circuit board and the metallic outer frame are connected to form a radio frequency chain (300), and the impedance matching circuit is configured to adjust an impedance of the radio frequency chain.

4. The remote control key according to claim 3, wherein the impedance matching circuit is configured to adjust the impedance of the radio frequency chain within a range of 45 Ω to 55 Ω.

5. The remote control key according to claim 3 or 4, wherein the impedance matching circuit comprises a capacitor, and the capacitor is electrically connected between a first end of the metallic outer frame and the ground wire.

6. The remote control key according to claim 5, wherein the impedance matching circuit comprises an inductor, and the inductor is electrically connected between the first end of the metallic outer frame and the ground wire.

7. The remote control key according to claim 6, wherein the capacitor and the inductor are connected in series or in parallel.

8. The remote control key according to claim 3 or 4, wherein the impedance matching circuit comprises an inductor, and the inductor is electrically connected between the first end of the metallic outer frame and the ground wire.

9. The remote control key according to claim 3, wherein the impedance matching circuit comprises a first capacitor (211) and a second capacitor (212), and the first capacitor and the second capacitor are connected in series and then connected to the ground wire.

10. The remote control key according to claim 1, wherein the first end is fixed to the circuit board via a first fastener (410) and is connected to a ground wire of the circuit board, and the second end is fixed to the circuit board via a second fastener (420) to form a radio frequency chain.

11. The remote control key according to claim 1, wherein one of the first end and the circuit board is provided with a first metallic connecting piece (510), the other of the first end and the circuit board is provided with a second metallic connecting piece (520), the first metallic connecting piece is provided with a first inserting post (511), the second metallic connecting piece is provided with a first inserting slot (521), and the first inserting post is inserted into the first inserting slot; and
one of the second end and the circuit board is provided with a third metallic connecting piece (610), the other of the second end and the circuit board is provided with a fourth metallic connecting piece (620), the third metallic connecting piece is provided with a second inserting post (611), and the fourth metallic connecting piece is provided with a second inserting slot (621), and the second inserting post is inserted into the second inserting slot.

12. The remote control key according to claim 1, wherein when the metallic outer frame is an entirety of an outer casing of the remote control key, the metallic outer frame is capable of being made of aluminum alloy or stainless steel; and
when the metallic outer frame is a part of an outer casing of the remote control key, the metallic outer frame is capable of being made of copper or titanium.

13. A vehicle (20), comprising the remote control key (10) according to any one of claims 1 to 12.
